# EUROPEAN PATENT SPECIFICATION

(11) **EP 4 159 289 B1**
(45) Date of publication and mention of the grant of the patent: **01.04.2026**
(21) Application number: 22192333.7
(22) Date of filing: 26.08.2022
(51) Int. Cl.: A62C 31/05

(54) **NOZZLE GEOMETRY TO CREATE ROTATIONAL VORTEX**
DÜSENGEOMETRIE ZUR ERZEUGUNG EINES DREHWIRBELS
GÉOMÉTRIE DE BUSE POUR CRÉER UN TOURBILLON ROTATIF

(30) Priority: 29.09.2021 US 202117489657
(43) Date of publication of application: 05.04.2023
(73) Proprietor: Kidde Technologies, Inc., Wilson, NC 27896 (US)
(72) Inventor: BALDWIN, Eli, Knightdale, 27545 (US)
(74) Representative: Dehns

(56) References cited:
- EP-A1- 3 482 800
- WO-A1-2014/030840

## Description

### BACKGROUND

Exemplary embodiments pertain to the art of fire suppression and, in particular, to nozzle geometry to create a rotational vortex.

Smoke detection and fire suppression are important functions in many environments. In an aircraft, for example, the functions are critical. This is because, unlike in other environments where escape is possible, quick suppression of a fire is vital to the integrity of the aircraft and the safety of the passengers. Once an overheat or fire condition is detected, a fire suppression agent may be discharged. WO 2014/030840 discloses a fire suppression spray nozzle including water supply hole.

### BRIEF DESCRIPTION

The present invention provides a nozzle of a fire suppression system as claimed in claim 1.

Additionally, the nozzle may include a structure suspended within the housing to restrict a path for the fire suppression agent from an inlet of the housing to the two or more orifices. The path is between the structure and an inner surface of the housing.

Additionally or alternatively, in this or other embodiments, the structure restricts the path closer to the two or more orifices more than the path farther from the two or more orifices near the inlet.

Additionally or alternatively, in this or other embodiments, each of the one or more obstacles creates the rotational vortex of the fire suppression agent into one pair of the two or more orifices.

Additionally or alternatively, in this or other embodiments, each of the one or more obstacles creates the rotational vortex of the fire suppression agent in opposite directions into each orifice of the pair of the two or more orifices.

Additionally or alternatively, in this or other embodiments, the nozzle is disposed in an aircraft.

The present invention also provides a method of assembling a nozzle of a fire suppression system as claimed in claim 7.

The method may also include suspending a structure within the housing to restrict a path for the fire suppression agent from an inlet of the housing to the two or more orifices, wherein the path is between the structure and an inner surface of the housing.

Additionally or alternatively, in this or other embodiments, the method also includes arranging the structure to restrict the path closer to the two or more orifices more than the path farther from the two or more orifices near the inlet.

Additionally or alternatively, in this or other embodiments, the affixing the one or more obstacles includes arranging the one or more obstacles to create the rotational vortex of the fire suppression agent into one pair of the two or more orifices.

Additionally or alternatively, in this or other embodiments, the affixing the one or more obstacles includes arranging the one or more obstacles such that each of the one or more obstacles creates the rotational vortex of the fire suppression agent in opposite directions into each orifice of the pair of the two or more orifices.

Additionally or alternatively, in this or other embodiments, the method also includes disposing the nozzle in an aircraft.

### BRIEF DESCRIPTION OF THE DRAWINGS

The following descriptions should not be considered limiting in any way. With reference to the accompanying drawings, like elements are numbered alike:
FIG. 1 illustrates aspects of an aircraft that includes a fire suppression system with a nozzle that is designed to create a vortex flow according to one or more embodiments;
FIG. 2 illustrates aspects of the fire suppression system with a nozzle that is designed to create a vortex flow according to one or more embodiments;
FIG. 3A is a cross-sectional view of a nozzle designed to create a vortex flow according to an exemplary embodiment;
FIG. 3B is a cross-sectional view of a nozzle designed to create a vortex flow according to another exemplary embodiments; and
FIG. 4 shows aspects of a nozzle that is designed to create a vortex flow according to one or more embodiments.

### DETAILED DESCRIPTION

A detailed description of one or more embodiments of the disclosed apparatus and method are presented herein by way of exemplification and not limitation with reference to the Figures.

As previously noted, fire suppression is an important function in different environments such as aircraft systems. In prior aircraft fire suppression systems, Halon 1301 is distributed into the cargo bay, for example, via a distribution system. Halon is an ozone-depleting substance whose production has ceased under the Montreal Protocol. Thus, environmentally friendly fire suppression agents are being developed as replacements for Halon. Some of these agents (e.g., trifluoromethyl iodine (CF₃I)) have sufficiently high boiling points that prevent large liquid droplets of the agent from fully vaporizing before impacting surfaces. The agent impacting a surface as a liquid droplet can form a film on the surface and hinder sufficient distribution of the agent to suppress the fire.

To avoid this scenario, prior approaches have sought to arrange a set of nozzles that emit the agent in specific configurations to create a vortex that increases distribution and uniformity of the agent. Embodiments of the systems and methods detailed herein relate to a nozzle geometry to create a rotational vortex. The internal geometry of the nozzle is designed to output a rotational vortex from each orifice of the nozzle. Creating the vortex does not rely on the arrangement of multiple nozzles, as in the prior approach. In addition, the geometry may be designed such that each pair of orifices creates counter-rotating rotational vortexes. The counter rotation of adjacent vortexes establishes a stable flow configuration. If, instead, the adjacent vortex flows were in the same direction, the flow directions of the vortexes would oppose each other a meeting point, resulting in dissipation of the vortexes and less disbursement of the fire suppression agent. As a result of the nozzle design, small liquid droplets of agent are efficiently generated and dispersed into the environment where they vaporize more rapidly than large droplets. The small droplets have dispersion characteristics similar to those of an airborne aerosol.

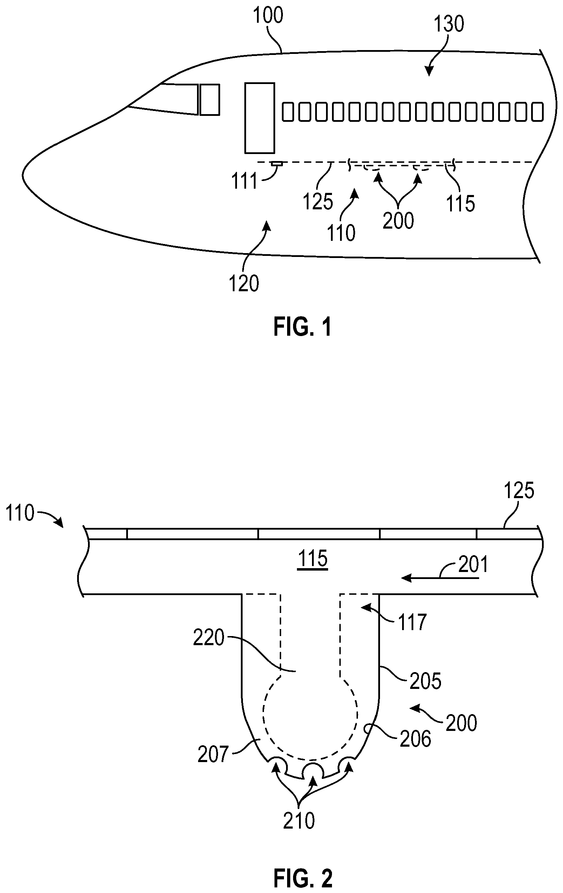

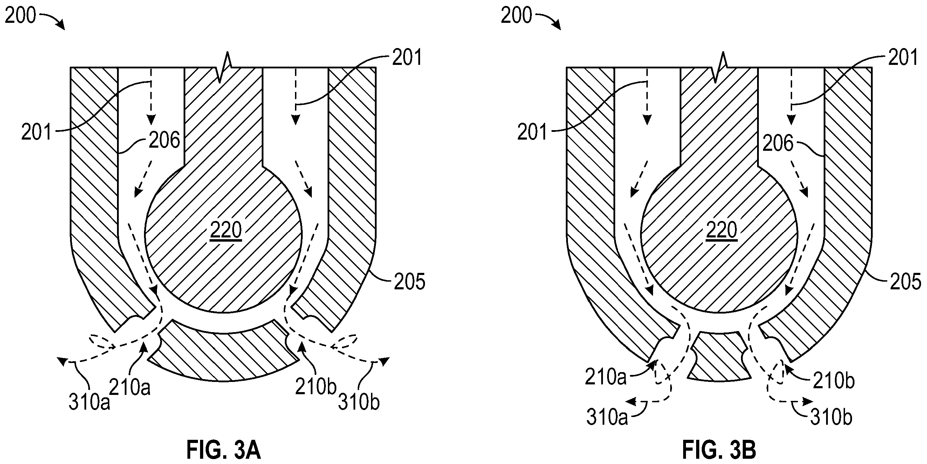

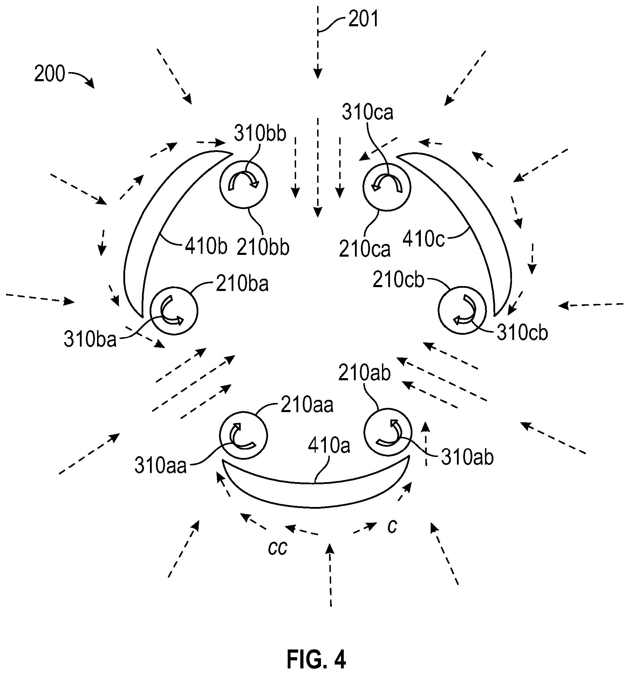

FIG. 1 illustrates aspects of an aircraft 100 that includes a fire suppression system 110 with a nozzle 200 (FIG. 2) that is designed to create a vortex flow 310 (FIGS. 3A, 3B, 4) according to one or more embodiments. The aircraft 100 is an exemplary environment in which the nozzle 200 according to one or more embodiments may be employed and is used for explanatory purposes. The exemplary aircraft 100 includes a cargo compartment 120 and a passenger compartment 130, separated by a divider 125 that is generally indicated by the dashed line in FIG. 1. An overheat detector 111 and aspects of a fire suppression system 110 are indicated in the cargo compartment 120.

As previously noted, overheat temperature detection and fire suppression may be important functions that are performed in various areas of the aircraft 100 (e.g., cargo compartment 110, engine nacelles). The fire suppression system 110 is shown to include a fire suppression agent supply 115 (e.g., container, pipeline) and nozzles 200 that output the fire suppression agent 201 into the cargo compartment 120 in the exemplary illustration. As discussed further with reference to FIGS. 3A, 3B, and 4, each nozzle 200 produces a vortex flow 310 from each of its orifices 210. An even number of orifices 210 is used to produce counter-rotating vortex flow 310 from each pair of orifices 210.

FIG. 2 illustrates aspects of the fire suppression system 110 with a nozzle 200 that is designed to create a vortex flow 310 (FIGS. 3A, 3B, 4) according to one or more embodiments. The fire suppression system 110 is shown attached to the divider 125 that acts as a ceiling for the cargo compartment 120 as an exemplary location. A fire suppression agent supply 115 is shown to supply fire suppression agent 201 to a nozzle 200. The nozzle 200 includes an outer housing 205 with orifices 210 that emit the fire suppression agent 201. The inner surface 206 of the housing 205 is indicated. The nozzle 200 may include four orifices 210, for example, with three of them being visible in the view of FIG. 2.

A structure 220 is shown suspended within the nozzle 200. As further discussed, the structure 220 and, additional obstacles 410 (FIG. 4) aid in creating the vortex flow 310 at each of the orifices 210. The structure 220 restricts the path for the fire suppression agent 201 from an inlet 117 of the nozzle 200 (i.e., of the housing 205) coupled to the fire suppression agent supply 115 to the orifices 210. Specifically, as shown in FIG. 2, the path for the fire suppression agent 201 is limited to the space 207 between the structure 220 and the inner surface 206 of the housing 205. As also shown, this space 207 is more restricted at the portions of the nozzle 200 that are closer to the orifices 210 than at other portions that are farther from the orifices 210 (e.g., at the inlet 117 of the nozzle 200).

FIGS. 3A and 3B are cross-sectional views of a nozzle 200 designed to create a vortex flow 310 according to alternate embodiments. FIG. 3A is a cross-sectional view of a nozzle 200 designed to create a vortex flow 310 according to an exemplary embodiment. The cross-section results from a cut-away of the housing 205 through two orifices 210a, 210b (generally referred to as 210). A portion of the structure 220 inside the housing 205 is also cut. Flow paths of the fire suppression agent 201 are indicated. As illustrated, the structure 220 in the nozzle 200 restricts the path of the fire suppression agent 201 to each of the orifices 210a, 210b.

As a result of the fire suppression agent 201 colliding with the inner surface 206 of the housing 205 and the structure 220, the flow rate of the fire suppression agent 201 reaching the orifices 210 is increased. The speed and angle at which the fire suppression agent 201 enters each orifice 210 results in vortex flow 310 of the fire suppression agent 250 out of each orifice 210. As FIG. 3A indicates, the vortex flow 310a out of the orifice 210a rotates clockwise while the vortex flow 310b out of the orifice 210b rotates counterclockwise. Thus, the pair of orifices 210a, 210b creates counter-rotating vortex flow 310.

FIG. 3B is a cross-sectional view of a nozzle 200 designed to create a vortex flow 310 according to another exemplary embodiment. The cross-section shown in FIG. 3B is similar to that shown in FIG. 3A. The counter-rotating vortex flow 310a, 310b of the fire suppression agent 201 resulting from each nozzle 210a, 210b is shown. However, the nozzle 200 in FIG. 3B has a narrow spray angle compared with the spray angle of the nozzle 200 in FIG. 3A. That is, the orifices 210a and 210b are closer and are angled (angled down more than the orifices 210a, 210b in FIG. 3A according to the orientation shown in FIGS. 3A and 3B) such that the vortex flows 310a and 310b, respectively emitted by orifices 210a and 210b and rotating in opposite directions to each other, are closer to each other in FIG. 3B than in FIG. 3A.

The examples shown in FIGS. 3A and 3B are not intended to limit the number or arrangement of the orifices 210 or their angle. Any number of orifices 210 may be used. As previously noted, an even number of orifices 210 is used with each pair of orifices 210 emitting counter-rotating vortex flow 310. The number of orifices 210 may be selected based on several factors. For example, the angle from inside (at the inner surface 206 of the housing 205) to outside (at an outer opening of the housing 205) may differ. The resulting spray angle may be a basis for determining the number of orifices 210. For example, a nozzle 200 with a narrower spray angle may require more orifices 210 than a nozzle 200 with a wider spray angle in order to distribute the fire suppression agent 201 in a given space. Additionally or alternately, more nozzles 200 may be used.

FIG. 4 shows aspects of a nozzle 200 that is designed to create a vortex flow 310 according to one or more embodiments. Based on the orientation illustrated in FIG. 2, the view in FIG. 4 is within the housing 205 of the nozzle 200 looking below the structure 220. Three pairs of orifices 210aa and 210ab, 210ba and 210bb, and 210ca and 210cb (generally referred to as 210) are shown. Three obstacles 410a, 410b, and 410c (generally referred to as 410) are also shown. These obstacles 410 are affixed to the inner surface 206 of the housing 205 of the nozzle 200. As shown, each obstacle 410 corresponds to one pair of the orifices 210. In the view shown in FIG. 4, the structure 220 may be above the orifices 210 and obstacles 410, further narrowing the flow path for the fire suppression agent 201 and further generating the vortex flow 310. That is, the flow of fire suppression agent 201 on the outer perimeter of the view shown in FIG. 4 has flowed past the structure 220.

The direction of the vortex flow 310 created based on the obstacles 410 and output through each orifice 210 is indicated. For example, the obstacle 410a is positioned to split the flow of fire suppression agent 201 and has a curved shape to generate a clockwise component c that creates a clockwise vortex flow 310aa into and through orifice 210aa and also into a counterclockwise component cc that creates a counterclockwise vortex flow 310ab into and through orifice 210ab. The size and shape of the obstacles 410 may be based on the distance between a given pair of orifices 210 and their relative location. The shape is designed to create the counter-rotational flow into the pair of orifices 210.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the appended claims. In addition, many modifications may be made to adapt a particular situation or material to the teachings of the present disclosure without departing from the claims. Therefore, it is intended that the present disclosure not be limited to the particular embodiment disclosed as the best mode contemplated for carrying out this present disclosure, but that the present disclosure will include all embodiments falling within the scope of the claims.

## Claims

1. A nozzle (200) of a fire suppression system (110), the nozzle comprising:
a housing (205); and
an even number of orifices (210, 210a, 210b) in the housing configured to emit a fire suppression agent (201), wherein each of the orifices emits the fire suppression agent in a rotational vortex (310a, 310b); the nozzle **characterised in that**
each pair (210aa, 210ab; 210ba, 210bb; 210ca, 210cb) of the orifices emits a counter-rotational flow (310) of the fire suppression agent in the rotational vortex such that one (210aa; 210ba; 210ca) of the pair emits a clockwise flow (310aa, 310ba, 310ca) of the rotational vortex and another (210ab; 210bb; 210cb) of the pair emits a counterclockwise flow (310ab, 310bb, 310cb) of the rotational vortex;
the nozzle further comprising one or more obstacles (410, 410a, 410b, 410c) affixed to an inner surface (206) of the housing, wherein a number of the one or more obstacles is half the even number of orifices.

2. The nozzle (200) according to claim 1, further comprising a structure (220) suspended within the housing (205) and configured to restrict a path for the fire suppression agent from an inlet (117) of the housing to the orifices (210, 210a, 210b), wherein the path is between the structure and an inner surface (206) of the housing.

3. The nozzle (200) according to claim 2, wherein the structure (220) is configured to restrict the path closer to the orifices more than the path farther from the orifices near the inlet (117).

4. The nozzle (200) according to any preceding claim, wherein the nozzle is configured to be disposed in an aircraft (100).

5. The nozzle (200) according to any preceding claim, wherein each of the one or more obstacles (410, 410a, 410b, 410c) is configured to create the rotational vortex (310a, 310b) of the fire suppression agent (201) into one pair (210aa, 210ab; 210ba, 210bb; 210ca, 210cb) of the orifices (210, 210a, 210b).

6. The nozzle (200) according to claim 5, wherein each of the one or more obstacles (410, 410a, 410b) is configured to create the rotational vortex (310a, 310b) of the fire suppression agent (201) in opposite directions into each orifice of the pair (210aa, 210ab; 210ba, 210bb; 210ca, 210cb) of the orifices (210, 210a, 210b).

7. A method of assembling a nozzle (200) of a fire suppression system (110), the method comprising:
obtaining a housing (205); and
configuring an even number of orifices (210, 210a, 210b) in the housing to emit a fire suppression agent (201) in a rotational vortex (310, 310a, 310b); the method **characterised in that**
the configuring the orifices includes configuring each pair (210aa, 210ab; 210ba, 210bb; 210ca, 210cb) of the orifices to emit a counter-rotational flow (310) of the fire suppression agent in the rotational vortex (310a, 310b) such that one (210aa; 210ba; 210ca) of the pair emits a clockwise flow (310aa, 310ba, 310ca) of the rotational vortex and another (210ab; 210bb; 210cb) of the pair emits a counterclockwise flow (310ab, 310bb, 310cb) of the rotational vortex;
the method further comprising affixing one or more obstacles (410, 410a, 410b, 410c) to an inner surface (206) of the housing, wherein a number of the one or more obstacles is half the even number of orifices.

8. The method according to claim 7, further comprising suspending a structure (220) within the housing (205) to restrict a path for the fire suppression agent (201) from an inlet (117) of the housing to the orifices (210, 210a, 210b), wherein the path is between the structure and an inner surface (206) of the housing.

9. The method according to claim 8, further comprising arranging the structure (220) to restrict the path closer to the orifices (210, 210a, 210b) more than the path farther from the orifices near the inlet (117).

10. The method according to claim 7, 8, or 9, wherein the affixing the one or more obstacles (410, 410a, 410b, 410c) includes arranging the one or more obstacles to create the rotational vortex (310a, 310b) of the fire suppression agent (201) into one pair (210aa, 210ab; 210ba, 210bb; 210ca, 210cb) of the orifices (210, 210a, 210b).

11. The method according to claim 10, wherein the affixing the one or more obstacles (410, 410a, 410b, 410c) includes arranging the one or more obstacles such that each of the one or more obstacles creates the rotational vortex (310a, 310b) of the fire suppression agent (201) in opposite directions into each orifice (210, 210a, 210b) of the pair (210aa, 210ab; 210ba, 210bb; 210ca, 210cb) of orifices.

12. The method according to any of claims 7-11, further comprising disposing the nozzle (200) in an aircraft (100).

## Patentansprüche

1. Düse (200) eines Brandunterdrückungssystems (110), wobei die Düse umfasst:
ein Gehäuse (205); und
eine gerade Anzahl von Öffnungen (210, 210a, 210b) in dem Gehäuse, die konfiguriert sind, um ein Brandunterdrückungsmittel (201) auszustoßen, wobei jede der Öffnungen das Brandunterdrückungsmittel in einem Drehwirbel (310a, 310b) ausstößt; wobei die Düse **dadurch gekennzeichnet ist, dass** jedes Paar (210aa, 210ab; 210ba, 210bb; 210ca, 210cb) der Öffnungen einen gegenläufigen Strom (310) des Brandunterdrückungsmittels in dem Drehwirbel ausstößt, sodass eine (210aa; 210ba; 210ca) des Paares einen Strom im Uhrzeigersinn (310aa, 310ba, 310ca) des Drehwirbels ausstößt und eine andere (210ab; 210bb; 210cb) des Paares einen Strom gegen den Uhrzeigersinn (310ab, 310bb, 310cb) des Drehwirbels ausstößt;
wobei die Düse ferner ein oder mehrere Hindernisse (410, 410a, 410b, 410c) umfasst, die an einer Innenoberfläche (206) des Gehäuses befestigt sind, wobei eine Anzahl des einen oder der mehreren Hindernisse die Hälfte der geraden Anzahl von Öffnungen ist.

2. Düse (200) nach Anspruch 1, ferner umfassend eine Struktur (220), die innerhalb des Gehäuses (205) aufgehängt und konfiguriert ist, um einen Pfad für das Brandunterdrückungsmittel von einem Einlass (117) des Gehäuses zu den Öffnungen (210, 210a, 210b) einzuengen, wobei der Pfad zwischen der Struktur und einer Innenoberfläche (206) des Gehäuses liegt.

3. Düse (200) nach Anspruch 2, wobei die Struktur (220) konfiguriert ist, um den Pfad näher an den Öffnungen stärker einzuengen als den Pfad weiter entfernt von den Öffnungen nahe dem Einlass (117).

4. Düse (200) nach einem der vorhergehenden Ansprüche, wobei die Düse konfiguriert ist, um in einem Luftfahrzeug (100) angeordnet zu werden.

5. Düse (200) nach einem der vorhergehenden Ansprüche, wobei jedes des einen oder der mehreren Hindernisse (410, 410a, 410b, 410c) konfiguriert ist, um den Drehwirbel (310a, 310b) des Brandunterdrückungsmittels (201) in ein Paar (210aa, 210ab; 210ba, 210bb; 210ca, 210cb) der Öffnungen (210, 210a, 210b) hinein zu erzeugen.

6. Düse (200) nach Anspruch 5, wobei jedes des einen oder der mehreren Hindernisse (410, 410a, 410b) konfiguriert ist, um den Drehwirbel (310a, 310b) des Brandunterdrückungsmittels (201) in entgegengesetzten Richtungen in jede Öffnung des Paares (210aa, 210ab; 210ba, 210bb; 210ca, 210cb) der Öffnungen (210, 210a, 210b) hinein zu erzeugen.

7. Verfahren zum Zusammenbauen einer Düse (200) eines Brandunterdrückungssystems (110), wobei das Verfahren umfasst:
Erhalten eines Gehäuses (205); und
Konfigurieren einer geraden Anzahl von Öffnungen (210, 210a, 210b) in dem Gehäuse, um ein Brandunterdrückungsmittel (201) in einem Drehwirbel (310, 310a, 310b) auszustoßen; wobei das Verfahren **dadurch gekennzeichnet ist, dass**
das Konfigurieren der Öffnungen einschließt, jedes Paar (210aa, 210ab; 210ba, 210bb; 210ca, 210cb) der Öffnungen zu konfigurieren, um einen gegenläufigen Strom (310) des Brandunterdrückungsmittels in dem Drehwirbel (310a, 310b) auszustoßen, sodass eine (210aa; 210ba; 210ca) des Paares einen Strom im Uhrzeigersinn (310aa, 310ba, 310ca) des Drehwirbels ausstößt und eine andere (210ab; 210bb; 210cb) des Paares einen Strom gegen den Uhrzeigersinn (310ab, 310bb, 310cb) des Drehwirbels ausstößt;
wobei das Verfahren ferner das Befestigen eines oder mehrerer Hindernisse (410, 410a, 410b, 410c) an einer Innenoberfläche (206) des Gehäuses umfasst, wobei eine Anzahl des einen oder der mehreren Hindernisse die Hälfte der geraden Anzahl von Öffnungen ist.

8. Verfahren nach Anspruch 7, ferner umfassend das Aufhängen einer Struktur (220) innerhalb des Gehäuses (205), um einen Pfad für das Brandunterdrückungsmittel (201) von einem Einlass (117) des Gehäuses zu den Öffnungen (210, 210a, 210b) einzuengen, wobei der Pfad zwischen der Struktur und einer Innenoberfläche (206) des Gehäuses liegt.

9. Verfahren nach Anspruch 8, ferner umfassend das Anordnen der Struktur (220), um den Pfad näher an den Öffnungen (210, 210a, 210b) stärker einzuengen als den Pfad weiter entfernt von den Öffnungen nahe dem Einlass (117).

10. Verfahren nach Anspruch 7, 8 oder 9, wobei das Befestigen des einen oder der mehreren Hindernisse (410, 410a, 410b, 410c) das Anordnen des einen oder der mehreren Hindernisse einschließt, um den Drehwirbel (310a, 310b) des Brandunterdrückungsmittels (201) in ein Paar (210aa, 210ab; 210ba, 210bb; 210ca, 210cb) der Öffnungen (210, 210a, 210b) hinein zu erzeugen.

11. Verfahren nach Anspruch 10, wobei das Befestigen des einen oder der mehreren Hindernisse (410, 410a, 410b, 410c) das Anordnen des einen oder der mehreren Hindernisse einschließt, sodass jedes des einen oder der mehreren Hindernisse den Drehwirbel (310a, 310b) des Brandunterdrückungsmittels (201) in entgegengesetzten Richtungen in jede Öffnung (210, 210a, 210b) des Paares (210aa, 210ab; 210ba, 210bb; 210ca, 210cb) von Öffnungen hinein erzeugt.

12. Verfahren nach einem der Ansprüche 7-11, ferner umfassend das Anordnen der Düse (200) in einem Luftfahrzeug (100).

## Revendications

1. Buse (200) d'un système d'extinction d'incendie (110), la buse comprenant :
un boîtier (205) ; et
un nombre pair d'orifices (210, 210a, 210b) dans le boîtier configurés pour émettre un agent extincteur (201), chacun des orifices émettant l'agent extincteur sous forme de vortex rotationnel (310a, 310b) ; la buse étant **caractérisée en ce que** chaque paire (210aa, 210ab ; 210ba, 210bb ; 210ca, 210cb) des orifices émet un flux contrarotatif (310) de l'agent extincteur dans le vortex rotationnel de sorte que l'un des éléments (210aa ; 210ba ; 210ca) de la paire émet un flux horaire (310aa, 310ba, 310ca) du vortex rotationnel et un autre élément (210ab ; 210bb ; 210cb) de la paire émet un flux antihoraire (310ab, 310bb, 310cb) du vortex rotationnel ;
la buse comprenant en outre un ou plusieurs obstacles (410, 410a, 410b, 410c) fixés à une surface intérieure (206) du boîtier, un nombre des un ou plusieurs obstacles étant la moitié du nombre pair d'orifices.

2. Buse (200) selon la revendication 1, comprenant en outre une structure (220) suspendue à l'intérieur du boîtier (205) et configurée pour restreindre une trajectoire de l'agent extincteur allant d'une entrée (117) du boîtier jusqu'aux orifices (210, 210a, 210b), dans laquelle la trajectoire se situe entre la structure et une surface intérieure (206) du boîtier.

3. Buse (200) selon la revendication 2, dans laquelle la structure (220) est configurée pour restreindre davantage la trajectoire plus proche des orifices que la trajectoire plus éloignée des orifices près de l'entrée (117).

4. Buse (200) selon une quelconque revendication précédente, la buse étant configurée pour être disposée dans un aéronef (100).

5. Buse (200) selon une quelconque revendication précédente, dans laquelle chacun des un ou plusieurs obstacles (410, 410a, 410b, 410c) est configuré pour créer le vortex rotationnel (310a, 310b) de l'agent extincteur (201) dans une paire (210aa, 210ab ; 210ba, 210bb ; 210ca, 210cb) des orifices (210, 210a, 210b).

6. Buse (200) selon la revendication 5, dans laquelle chacun des un ou plusieurs obstacles (410, 410a, 410b) est configuré pour créer le vortex rotationnel (310a, 310b) de l'agent extincteur (201) dans des directions opposées dans chaque orifice de la paire (210aa, 210ab ; 210ba, 210bb ; 210ca, 210cb) des orifices (210, 210a, 210b).

7. Procédé d'assemblage d'une buse (200) d'un système d'extinction d'incendie (110), le procédé comprenant :
l'obtention d'un boîtier (205) ; et
la configuration d'un nombre pair d'orifices (210, 210a, 210b) dans le boîtier pour émettre un agent extincteur (201) dans un vortex rotationnel (310, 310a, 310b) ; le procédé étant **caractérisé en ce que**
la configuration des orifices inclut la configuration de chaque paire (210aa, 210ab ; 210ba, 210bb ; 210ca, 210cb) des orifices de façon à émettre un flux contrarotatif (310) de l'agent extincteur dans le vortex rotationnel (310a, 310b) de sorte que l'un des éléments (210aa ; 210ba ; 210ca) de la paire émet un flux horaire (310aa, 310ba, 310ca) du vortex rotationnel et un autre élément (210ab ; 210bb ; 210cb) de la paire émet un flux antihoraire (310ab, 310bb, 310cb) du vortex rotationnel ;
le procédé comprenant en outre la fixation d'un ou plusieurs obstacles (410, 410a, 410b, 410c) à une surface intérieure (206) du boîtier, un nombre des un ou plusieurs obstacles étant la moitié du nombre pair d'orifices.

8. Procédé selon la revendication 7, comprenant en outre la suspension d'une structure (220) à l'intérieur du boîtier (205) de façon à restreindre une trajectoire de l'agent extincteur (201) allant d'une entrée (117) du boîtier jusqu'aux orifices (210, 210a, 210b), la trajectoire se situant entre la structure et une surface intérieure (206) du boîtier.

9. Procédé selon la revendication 8, comprenant en outre l'agencement de la structure (220) de façon à restreindre davantage la trajectoire plus proche des orifices (210, 210a, 210b) que la trajectoire plus éloignée des orifices près de l'entrée (117).

10. Procédé selon la revendication 7, 8 ou 9, dans lequel la fixation des un ou plusieurs obstacles (410, 410a, 410b, 410c) inclut l'agencement des un ou plusieurs obstacles de façon à créer le vortex rotationnel (310a, 310b) de l'agent extincteur (201) dans une paire (210aa, 210ab ; 210ba, 210bb ; 210ca, 210cb) des orifices (210, 210a, 210b).

11. Procédé selon la revendication 10, dans lequel la fixation des un ou plusieurs obstacles (410, 410a, 410b, 410c) inclut l'agencement des un ou plusieurs obstacles de façon à ce que chacun des un ou plusieurs obstacles crée le vortex rotationnel (310a, 310b) de l'agent extincteur (201) dans des directions opposées dans chaque orifice (210, 210a, 210b) de la paire (210aa, 210ab ; 210ba, 210bb ; 210ca, 210cb) d'orifices.

12. Procédé selon l'une quelconque des revendications 7 à 11, comprenant en outre la disposition de la buse (200) dans un aéronef (100).
